# EUROPEAN PATENT SPECIFICATION

(11) **EP 1 382 647 B1**
(45) Date of publication and mention of the grant of the patent: **13.04.2011**
(21) Application number: 03011463.1
(22) Date of filing: 20.05.2003
(51) Int. Cl.: C09D 133/06, C08G 59/42, C09D 5/03

(54) **Acrylic thermosetting powder coating compositions**
Thermohärtende Pulverbeschichtungsmassen auf der Basis von Acrylharzen
Revêtements thermodurcissables sous forme de poudre à base de résines acryliques

(30) Priority: 21.05.2002 JP 2002146654
(43) Date of publication of application: 21.01.2004
(73) Proprietor: Mitsui Chemicals, Inc., Tokyo (JP)
(72) Inventor: Mizoguchi, Mitsuyuki, c/o Mitsui Chem., Inc., Sodegaura-shi, Chiba (JP); Hirose, Yoshiharu, Ichihara-shi, Chiba (JP)
(74) Representative: Strehl Schübel-Hopf & Partner

(56) References cited:
- EP-A1- 0 038 635
- US-A- 3 978 153
- DATABASE WPI Section Ch, Week 197552 Derwent Publications Ltd., London, GB; Class A14, AN 1975-85344W XP002294682 & JP 50 067843 A (DAINIPPON INK & CHEM KK) 6 June 1975 (1975-06-06)

## Description

### FIELD OF THE INVENTION

The present invention relates to an acrylic thermosetting powder coating composition, and more particularly to an acrylic thermosetting powder coating composition which is improved in compatibility with a polyesteric thermosetting powder coating by enhancing a dispersing or mixing condition of a resin and a curing agent by a conventional compounding technique of melt-kneading without any deterioration in appearance properties (smoothness, high gloss, etc.), physical properties (hardness, mar/scratch resistance, etc.) and chemical properties (acid resistance, solvent resistance, etc.) of the resultant coating film.

### BACKGROUND OF THE INVENTION

Powder coatings are environmentally friendly coatings which cause very little emission of solvents and therefore are being increasingly used in the United States and Europe where regulations on VOC (volatile organic compounds) emission are so strict. Thermosetting powder coatings make up the majority of the consumption of these powder coatings, and acrylic and polyesteric thermosetting powder coatings are typical examples thereof.

In general, the "acrylic thermosetting powder coatings" contain acrylic resins and the "polyesteric thermosetting powder coatings" contain polyester resins as their main binder resins. The main binder acrylic resins for the acrylic thermosetting powder coatings are largely classified based on the kind of their reactive functional groups into three types: hydroxyl group-containing acrylic resins, acid (carboxyl) group- containing acrylic resins, and glycidyl group-containing acrylic resins. These resins are used as main binder resins of thermosetting powder coatings.

The thermosetting powder coating which will be discussed in the present invention is an acrylic thermosetting powder coating which contains the glycidyl group-containing acrylic resin as a main binder resin. As compared with the hydroxyl group-containing acrylic resins and the acid group-containing acrylic resins of the same molecular weights, the glycidyl group-containing acrylic resins are low in melt viscosities and most excellent in smoothness of the resultant coating films obtained by baking at the same temperatures. A thermosetting powder coating comprising the glycidyl group-containing acrylic resin and a polyvalent carboxyl compound as a curing agent, is capable of forming a firm coating filmthat is excellent in appearance properties (smoothness, high gloss, etc.), physical properties (hardness, mar/scratch resistance, etc.) and chemical properties (acid resistance, solvent resistance, etc.) as well as in weathering resistance which is the inherent characteristic of the acrylic resins.

As described in EP Patent No. 696622 for example, the acrylic thermosetting powder coatings which contain the glycidyl group-containing acrylic resins can be produced by melt-kneading the glycidyl group-containing acrylic resin and the polyvalent carboxyl compound as a curing agent to compound them in an atmosphere or condition which would not induce substantially any premature thermosetting reactions.

However, the acrylic thermosetting powder coatings containing glycidyl group-containing acrylic resins obtained by the above compounding technique of melt-kneading have two potential and fatal problems.

One of those problems is that the glycidyl group-containing acrylic resins are generally hydrophobic in comparison with the hydroxyl group- and acid (carboxyl) group-containing acrylic resins, so that they are difficult to be mixed with other compounds which have hydrophilic chemical structure or functional groups, such as polyvalent carboxyl compound curing agents, sufficiently on the molecular level by the conventional mechanical compounding technique of melt-kneading. In addition, the acrylic resins are generally stiff and brittle themselves and dryblending thereof with other raw materials is apt to produce a fine powdered dryblend having low bulk density in the pre-dry-mixing step before the melt-kneading step. On account of this phenomenon, the packing efficiency in melt-kneading apparatus is lowered to cause some difficulties in effecting sufficiently high shear stress, which further worsens the dispersing problem. Furthermore, the big difference of melt viscosity in the extruder(melt-kneader) between the acrylic resins and the crystal compounds like polyvalent carboxyl compound curing agents also further worsens the dispersion problem. Accordingly, it' s natural to think the conventional acrylic thermosetting powder coatings, especially, based on the glycidyl group-containing acrylic resins and polyvalent carboxyl compound curing agents do not have good enough dispersion to the molecular level.

Exemplary effective measures against this problem will be GB Patent No. 2326883 in which components (A) and (B) are completely dissolved in tert-butanol and the solution is freeze-dried to remove the tert-butanol so that these components can be dispersed with each other in enhanced homogeneity; and US Patent No. 6114414 and WO 9534606 in which components (A) - and (B) are homogeneously compounded with the use of a supercritical inert compound as a solvent medium capable of promoting the mixing of these components, and the solvent medium is thereafter removed by pressure release.

However, none of these methods has been put to practical uses at the present time since they involve large-scale changes in production process.

Alternatively, the mixing condition of the glycidyl group-containing acrylic resin with the polyvalent carboxyl compound as a curing agent can be improved by modifying the glycidyl group-containing acrylic resin instead of using the above specific solvents. Examples of such methods include JP-B-6(1994)-104791 in which the glycidyl group-containing resin is converted to be partially hydrophilic by modification of their glycidyl groups with a phosphite so that the coating film smoothness can be improved. Although the curing technique or system is different, JP-A-2 (1990)-151670 will be an exemplary reference method. The thermosetting powder coating of this method is designed so that a polyester resin and an acrylic resin which both have hydroxyl groups as a main functional group would be co-cured with block polyisocyanate.
In this reference method, the polyester resin and the acrylic resin are reacted by means of a slight amount of carboxyl groups in the polyester resin and glycidyl groups intentionally introduced in the acrylic resin and the resultant reaction product is used as a third resin component to enhance the coating film hardness. These methods can be expected to enable homogenous dispersion and compounding effects since, by design or not, the coating films resulted from the compound of resins and curing agent components by the methods surely have improved properties. This fact will allow presumption that the dispersing condition has been achieved nearly on the ideal molecular level.

The second problem of the acrylic thermosetting powder coatings containing the glycidyl group-containing acrylic resins, is that they have no compatibility with the polyesteric thermosetting powder coatings. The term "compatibility" is an often-used term in the field of coating. This term is used in the invention to mean that the coating composition as a contaminant gives no defects, especially, no crater (depressions like dimples of golf balls) on the surface of the coating films of a different kind of coating composition, as if these different kinds of coating composition melt in each other completely and homogeneously. That is, when the thermosetting powder coating containing the glycidyl group-containing acrylic resin contaminates (= is unintentionally dry-blended with) the polyesteric thermosetting powder coating, the polyesteric coating film obtained therefrom will have a number of craters on the surface so that the film smoothness is remarkably damaged. This is generally considered to result from the low surface tension of the acrylic resin, particularly the glycidyl group-containing acrylic resins which are more hydrophobic than the polyester resins. The polyesteric thermosetting powder coatings typically comprise a polyester resin containing carboxyl groups as a main binder resin and TGIC (triglycidyl isocyanurate) or Primid XL-552 (β-hydroxyalkylamide, produced by EMS-Chemie) as a curing agent. The acrylic thermosetting powder coatings have no compatibility with those typical polyesteric powder coatings and also with polyesteric ultraviolet-curing powder coatings that comprise an unsaturated polyester resin or a polyester acrylate.

For the purpose of reducing the occurrence of craters, flow additives (flow control agents or leveling agents) designed to have hydrophobicity and a low surface tension, are generally used. The flow additives are usually hydrophobic liquid acrylic copolymers which, as previously blended in the coating composition, will migrate in the coating films obtained from the thermosetting powder coatings toward the surface with passage of time as the coating films are in a molten state by heating. As a result, a layer of low surface tension is formed at the outer coating surface so that, for example, the occurrence of craters can be prevented. Most curable powder coatings inclusive of the polyesteric thermosetting powder coatings essentially contain the flow additives in approximate amounts of 1 wt%.

However, the acrylic thermosetting powder coatings containing the glycidyl group-containing acrylic resins hardly show the compatibility even with the polyesteric thermosetting powder coatings which contain the above flow additives. The present inventors assumed that the cause of no compatibility of the acrylic thermosetting powder coatings containing the glycidyl group-containing acrylic resins should be not only that the glycidyl group-containing acrylic resins were inherently hydrophobic and had lower surface tensions than the polyester resins but also these acrylic resins had not been compounded homogeneously with the polyvalent carboxyl compounds as curing agents to the ideal molecular level so that microphase separation in the acrylic powder coatings to bring about sever distribution of surface tension onto the surface of contaminated polyestereric powder coatings. That is, it was assumed that one of the causes of the compatibility problem was a dispersion problem.

For example, a study on improvement of the flow additives is described in WO 9730131, in which the flow additive acrylic copolymer is designed to contain both the hydrophobic and hydrophilic blocks to depress the occurrence of craters. The accomplishment of this study is presumably because of the function of the flow additive not only to lower the surface tension of the coating films but also to help the homogenous melt-kneading (or to promote the dispersion) between the polyvalent carboxyl curing agents and the glycidyl group-containing acrylic resins.

Under these circumstances, there has been demand on the advent of an acrylic thermosetting powder coating composition which is obtainable in the ideal mixing condition of a resin and a curing agent on the molecular level by a conventional compounding technique of melt-kneading without any deterioration in appearance properties (smoothness, high gloss, etc.), physical properties (hardness, mar/scratch resistance, etc.), and chemical properties (acid resistance, solvent resistance, etc.) of the resultant coating films, and further which is improved in compatibility with the polyesteric thermosetting powder coating.

### OBJECT OF THE INVENTION

In view of solving these problems related to the prior art, it is an object of the invention to provide an acrylic thermosetting powder coating composition which is improved in compatibility with the polyesteric thermosetting powder coating by achieving the ideal mixing condition of a resin and a curing agent on the molecular level by a conventional compounding technique of melt-kneading without any deterioration in appearance properties (smoothness, high gloss, etc.), physical properties (hardness, mar/scratch resistance, etc.) and chemical properties (acid resistance, solvent resistance, etc.) of the resultant coating films.

### SUMMARY OF THE INVENTION

The present invention provides the following:
(1) An acrylic thermosetting powder coating composition comprising:
   a glycidyl group-containing acrylic resin (A) which comprises at least one glycidyl copolymer (a) modified with a carboxyl compound (C) and which may contain an unmodified glycidyl copolymer (a), said modified and unmodified glycidyl copolymers (a) being obtained by copolymerizing glycidyl methyacrylate and/or β-methyl glycidyl methacrylate with other ethylenically unsaturated monomers; and
   a polyvalent carboxyl compound (B) as a curing agent which is selected from aliphatic polybasic acids of 4 to 20 carbon atoms, dehydrated condensates thereof and polyester resins having carboxyl groups as a main functional group,
   said carboxyl compound (C) being at least one compound selected from the group consisting of the fatty acids (c1) which are saturated or unsaturated fatty acids of 1 to 20 carbon atoms, the oxyacids (c2) which are aliphatic or aromatic oxyacids of 2 to 20 carbon atoms, and the polyvalent carboxyl compounds (c3) which are aliphatic polybasic acids of 4 to 20 carbon atoms, dehydrated condensates thereof, or polyester resins having carboxyl groups as a main functional group,
   wherein the polyvalent carboxyl compound (c3) as the carboxyl compound (C) is different from the polyvalent carboxyl compound (B) as the curing agent component, and wherein the polyester resins as the compound (B) are used in combination with at least one of the aliphatic polybasic acids and the dehydrated condensates thereof, and
   said glycidyl copolymer (a) for the glycidyl group-containing acrylic resin (A) having been modified in a modification amount of 0.1 to 10 mol% based on the total mol of the glycidyl groups and/or β-methyl glycidyl groups in (A) prior to the modification, and wherein at least one of one or more modified glycidyl copolymers (a) for the glycidyl group-containing acrylic resin (A) has been modified in a manner such that:
      (Z1) a lower-molecular-weight glycidyl copolymer (a-S) is modified with the carboxyl compound (C) and the resulting modified copolymer (a-S) is blended with a higher-molecluar-weight unmodified glycidyl copolymer (a-L) which is identical with the glycidyl copolymer (a-S) in the kind of the ethylenically unsaturated monomers copolymerized with glycidyl methacrylate and/or β-methyl glycidyl methacrylate and also in the weight ratio of these monomers and which differs from the glycidyl copolymer (a-S) in the molecular weight, in a molten or dissolved state so that only the low molecular weight fraction of glycidyl copolymer is selectively modified by the reaction of the glycidyl groups and/or β-methyl glycidyl groups with the carboxyl groups; or
      (Z2) the glycidyl copolymer (a) is separated into two fractions of different molecular weights by reprecipitation with good and poor solvents, and the lower-molecular-weight fraction (a-S)' alone is modified with the carboxyl compound (C) and the modified lower-molecular-weight fraction (a-S)' is mixed with the unmodified higher-molecular-weight fraction (a-L)' and reblended with each other in a molten or dissolved state so that only the low molecular weight fraction of glycidyl copolymer is selectively modified by the reaction of the glycidyl groups and/or β-methyl glycidyl groups with the carboxyl groups.
(2) The thermosetting powder coating composition according to (1) above, wherein the glycidyl group-containing acrylic resin (A) contains a hydroxy group-containing ethylenically unsaturated monomer in a proportion of 1 to 15 wt% based on the total weight of glycidyl methacrylate and/or β-methyl glycidyl methacrylate and other ethylenically unsaturated monomer of all the glycidyl copolymers (a).

### DETAILED DESCRIPTION OF THE INVENTION

The acrylic thermosetting powder coating composition of the invention will be described in detail hereinafter.

The acrylic thermosetting powder coating composition comprises a glycidyl group-containing acrylic resin (A) and a polyvalent carboxyl compound (B) as a curing agent component.

### (A) Glycidyl Group-Containing Acrylic Resin

The glycidyl group-containing acrylic resin (A) comprises at least one glycidyl copolymer (a) obtained by copolymerizing glycidyl methacrylate and/or β-methyl glycidyl methacrylate with other ethylenically unsaturated monomers, and at least one or more glycidyl copolymers (a) has been modified with the carboxyl compound (C) . That is, the glycidyl group-containing acrylic resin (A) comprises the modified glycidyl copolymer (a) and optionally the unmodified glycidyl copolymer (a). The unmodified glycidyl copolymer (a) may have the same or different composition as/from that of the yet to be modified glycidyl copolymer (a).

### Glycidyl Copolymer (a)

In consideration of the complexity in production of the coatings, one or two kinds of the glycidyl copolymers (a) will be used for the acrylic resin (A), but there will be no problem in using three or more kinds of the glycidyl copolymers (a).

The weight proportion of glycidyl methacrylate and/or β-methyl glycidyl methacrylate is, although not particularly limited to, preferably 10 to 55 wt%, more preferably 20 to 50 wt% of the total ethylenically unsaturated monomers used for the glycidyl copolymer (a). If the above amount exceeds 55 wt%, costs will be so increased that practical use of the coatings will be difficult; contrary sufficient film strength cannot be obtained when it is less than 10 wt%.

Examples of the other ethylenically unsaturated monomer copolymerizable with glycidyl methacrylate and/or β-methyl glycidyl methacrylate include:
(meth)acrylates, such as methyl(meth)acrylate, ethyl (meth)acrylate, n-propyl(meth)acrylate, isopropyl (meth)acrylate, n-butyl(meth)acrylate, isobutyl (meth)acrylate, tert-butyl(meth)acrylate, n-amyl (meth)acrylate, isoamyl(meth)acrylate, n-hexyl (meth)acrylate, 2-ethylhexyl(meth)acrylate, octyl (meth)acrylate, dodecyl(meth)acrylate, stearyl (meth)acrylate, tridecyl(meth)acrylate, lauroyl (meth)acrylate, cyclohexyl(meth)acrylate, isobornyl (meth)acrylate, benzyl(meth)acrylate, phenyl(meth)acrylate, dimethylaminoethyl(meth)acrylate and diethylaminoethyl (meth)acrylate;
carboxyl group-containing vinyls, such as acrylic, methacrylic, maleic, and itaconic acids, and monoesters thereof;
aromatic vinyl compounds, such as styrene, α-methylstyrene, vinyltoluene and t-butylstyrene;
hydroxyl group-containing vinyl compounds, such as hydroxyethyl acrylate, 2-hydroxyethyl(meth)acrylate, 3-hydroxypropyl(meth)acrylate, 4-hydroxybutyl (meth)acrylate, (poly)ethylene glycol mono(meth)acrylate, hydroxyethyl vinylether and lactone-modified hydroxyethyl (meth)acrylate;
halogen-containing vinyl compounds, such as vinyl chloride, vinylidene chloride, vinyl fluoride, monochlorotrifluoroethylene, tetrafluoroethylene and chloroprene; and
other compounds, such as acrylonitrile, methacrylonitrile, vinyl acetate, vinyl propionate, acrylamide, methacrylamide, methylol acrylamide, methylolmethacrylamide, ethylene, propylene, α-olefins of 4 to 20 carbon atoms and vinyl pyrrolidone.

Macromonomers which have segments containing the above monomers or copolymers thereof and which have a vinyl group at the terminal position, can also be used. These monomers may be used individually or in combination of two or more kinds. The above methyl (meth)acrylate, etc. means methyl acrylate and methyl methacrylate, etc.

The glycidyl group-containing acrylic resin (A) preferably contains a hydroxy group-containing ethylenically unsaturated monomer copolymerized in a proportion of 1 to 15 wt% based on the total weight of glycidyl methacrylate and/or β-methyl glycidyl methacrylate and the other ethylenically unsaturated monomer (s) of all the glycidyl copolymers (a).

Preferable examples of the hydroxyl group-containing ethylenically unsaturated monomer include the above-mentioned hydroxyl group-containing vinyl compounds, such as hydroxyethyl acrylate, 2-hydroxyethyl (meth)acrylate, 3-hydroxypropyl (meth)acrylate, 4-hydroxybutyl (meth)acrylate, (poly)ethylene glycol mono(meth)acrylate, hydroxyethyl vinylether and lactone-modified hydroxyethyl (meth)acrylate, of which (poly)ethylene glycol mono(meth)acrylate and lactone-modified hydroxyethyl (meth)acrylate are more preferred. The lactone-modified hydroxyethyl (meth)acrylate is particularly preferable. These monomers may be used individually or in combination of two or more kinds.

For example, the lactone-modified hydroxyethyl (meth)acrylate can be represented by the formula:
CH₂=CR-COO(CH₂)-[COO-(CH₂)₅]]ₙOH (wherein R is hydrogen or a methyl group);
and examples thereof include Tone monomer M-100 (trade name, available from Union Carbide), SR495 (trade name, available from Sartomer Company, Inc.), and FA2, FA3, FM2 and FM3 (trade names, available from Daicel Chemical Industries, Ltd.).

The hydroxyl group-containing ethylenically unsaturated monomer is preferably used in amounts within 1 to 15 wt%, more preferably within 5 to 15 wt% based on the total ethylenically unsaturated monomers in (A) . The acid resistance of the coating films will be deteriorated if it is used in amounts above 15 wt%. The hydroxyl group-containing ethylenically unsaturated monomer may be contained in all the glycidyl copolymers (a) or some of them. Those glycidyl copolymers (a) desirably have weight-average molecular weights (Mw) of, although not particularly limited to, 1,000 to 20,000, particularly 3,000 to 10,000 in terms of polystyrene as measured by GPC, and desirably have actual glass transition temperatures (Tg) of 40 to 70°C as measured by DSC (differential scanning calorimeter) .

### Modified Glycidyl Copolymer (a)

Of one or more glycidyl copolymers (a) for the glycidyl group-containing acrylic resin (A) of the invention, at least one glycidyl copolymer (a) is modified with the carboxyl compound (C) by the reaction of the glycidyl and/or β-methyl glycidyl groups with the carboxyl groups.

The carboxyl compound (C) is at least one compound selected from the group consisting of fatty acids (c1), oxyacids (c2) and polyvalent carboxyl compounds (c3).

The fatty acids (c1) are saturated fatty acids of 1 to 20 carbon atoms which have structures of the formula CH₃-(CH₂)ₘ-COOH (m = 0-19), such as formic acid, acetic acid, propionic acid, butyric acid, valeric acid, caproic acid, enanthic acid, caprylic acid, pelargonic acid, capric acid, undecylic acid, lauric acid, tridecylic acid, myristic acid, pentadecylic acid, palmitic acid, heptadecylic acid, stearic acid, nonadecanoic acid and arachic acid; and unsaturated fatty acids of 1 to 20 carbon atoms, such as acrylic acid, crotonic acid, isocrotonic acid, undecylenic acid, oleic acid, elaidic acid, sorbic acid, ricinolic acid, linolenic acid and arachidonic acid. Of these, the saturated fatty acids, such as caproic acid and caprylic acid, are particularly preferable. These fatty acids may be used individually or in combination of two or more kinds.

The oxyacids (c2) are compounds which have hydroxyl and carboxyl groups in the molecule. The oxyacids (c2) are aliphatic oxyacids of 2 to 20 carbon atoms, such as glycolic acid, lactic acid, hydroacrylic acid, α-oxybutyric acid, glyceric acid, tartronic acid, malic acid, tartaric acid, citric acid, dimethylolbutanoic acid, dimethylolpropionic acid and 12-hydroxystearic acid; and aromatic oxyacids of 2 to 20 carbon atoms, such as salicylic acid, oxybenzoic acid, gallic acid, mandelic acid and tropic acid. Of these, the aliphatic oxyacids, particularly dimethylolbutanoic acid, dimethylolpropionic acid and 12-hydroxystearic acid are preferable. These oxyacids may be used individually or in combination of two or more kinds.

The polyvalent carboxyl compound (c3) can be arbitrarily selected from aliphatic polybasic acids of 4 to 20 carbon atoms, dehydrated condensates thereof and polyester resins having carboxyl groups as main functional groups.

Examples of the aliphatic polybasic acids of 4 to 20 carbon atoms include linear aliphatic dibasic acids, such as succinic acid, glutaric acid, adipic acid, pimelic acid, suberic acid, azelaic acid, sebacic acid, undecanedioic acid, dodecanedioic acid, brassylic acid, tetradecanedioic acid, pentadecanedioic acid, hexadecanedioic acid, heptadecanedioic acid, octadecanedioic acid and eicosanedioic acid; and dehydrated condensates thereof. Of these, glutaric acid, pimelic acid, azelaic acid, undecanedioic acid and brassylic acid which have odd carbon atoms are particularly preferable. These polybasic acids may be used individually or in combination of two or more kinds.

The polyester resins having carboxyl groups as a main functional group for use in the invention have at least 1.0 carboxyl group on average in one molecule, acid values of 20 to 200 (mgKOH/g), glass transition temperatures (Tg) of 20 to 80°C, and GPC number-average molecular weights (Mn) of 100 to 10,000 in terms of polystyrene. Those polyester resins are easily available. Preferably, the polyester resins having acid values of 20 to 60 (mgKOH/g), such as Albester 5140 (trade name, available from Eastman Chemical Company), are used.

The carboxyl compound (C) is particularly preferably selected from the above fatty acids (c1) and oxyacids (c2) since the polyvalent carboxyl compounds (C3) could cause the modified glycidyl copolymer to contain a gel polymer which is insoluble in organic solvents and cannot be dissolved under heating.

Of one or more glycidyl copolymers (a) for the glycidyl group-containing acrylic resin (A), at least one glycidyl copolymer (a) is modified with the carboxyl compound (C) by the reaction of the glycidyl and/or β-methyl glycidyl groups with the carboxyl groups in the following manner.

At least one or more glycidyl copolymers (a) for the glycidyl group-containing acrylic copolymer (A) is to be modified, which means the case where all the glycidyl copolymers (a) have been modified is acceptable.

The glycidyl methacrylate and β-methyl glycidyl methacrylate, which are essential ethylenically unsaturated monomers to produce the glycidyl copolymers (a), are in general very expensive in the market. Accordingly, it is commercially unfavorable that the glycidyl groups and/or the β-methyl glycidyl groups introduced into the glycidyl copolymers (a) from these methacrylic compounds, are excessively consumed to cause a shortage of thermosetting reactive groups by modification over a moderate extent for achieving the object of the invention. It will be appreciated that such excessive modification results in deteriorated film strength. In the invention, the modification should be carried out to consume the glycidyl groups and/or the β-methyl glycidyl groups in an amount of 0.1 to 10 mol%, preferably 0.1 to 8 mol%, more preferably 1 to 8 mol% based on the total mol of the glycidyl groups and/or the β-methyl glycidyl groups in (A) prior to any modification.

Although the above modification for the glycidyl copolymer (a) may be effected in all molecular weights of the each copolymer (a), the following two methods are more effective for achieving the object of the invention, i.e., for improving the compatibility with the polyesteric thermosetting powder coatings, by the modification at the above low amounts.

### (1) First modification method (Z1)

A lower-molecular-weight glycidyl copolymer (a-S) is modified with the carboxyl compound (C) and the resulting modified copolymer (a-S) is blended with a higher-molecular-weight unmodified glycidyl copolymer (a-L) which is identical with the glycidyl copolymer (a-S) in the kind of the ethylenically unsaturated monomers copolymerized with glycidyl methacrylate and/or β-methyl glycidyl methacrylate and also in the weight ratio of these monomers and which differs from the glycidyl copolymer (a-S) in the molecular weight, in a molten or dissolved state.

### (2) Second modification method (Z2)

The glycidyl copolymer (a) is separated into two fractions of different molecular weights by reprecipitation with good and poor solvents, and the lower-molecular-weight fraction (a-S)' alone is modified with the carboxyl compound (C) and the modified lower-molecular-weight fraction (a-S)' is mixed with the unmodified higher-molecular-weight fraction (a-L)' and reblended with each other in a molten or dissolved state.

These modification methodsenable selective modification of the lower-molecular-weight fractions of each glycidyl copolymer (a).

The acrylic resins can be readily obtained by heating a desired monomers mixture together with a radical polymerization initiator. Any conventional polymerization methods, such as bulk, solution, emulsion or suspension polymerization, may be used for this purpose.

In the case of themodificationmethod (Z1), batch solution polymerization using an organic solvent is most suitable from the viewpoint of practical convenience. The organic solvent used in the polymerization is preferably an aromatic organic solvent, such as toluene or xylene, but is not limited thereto and can be arbitrarily selected in consideration of its safety, boiling point and solubility for the carboxyl compound (C).

The two kinds of glycidyl copolymers (a-S) and (a-L), which are identical with each other in the kind of the ethylenically unsaturated monomer copolymerized with glycidyl methacrylate and/or β-methyl glycidyl methacrylate and also in the weight ratio of these monomers but which differ from each other in the molecular weight, can be readily obtained as different batches by the batch solution polymerization with adjustments in the amounts of polymerization initiators or chain transfer agents, the polymerization temperatures,
and the weight ratios of the organic solvents and the mixtures of ethylenically unsaturated monomers (glycidyl methacrylate and/or β-methyl glycidyl methacrylate and the other ethylenically unsaturated monomers),etc.. In order to modify only the lower-molecular-weight copolymer (a-S), the carboxyl compound (C) soluble in the organic solvent used in the corresponding batch can be added to the batch, and the glycidyl groups and/or the β-methyl glycidyl groups can be reacted with the carboxyl groups under heating for a given time.

The termination time point of the modification can be readily judged by the disappearance time of the carboxyl groups and the carboxylic anhydride groups according to the known method of acid value measurement, in which case the molar ratio (ac)/(ep) of the total amount (ac) of the carboxyl groups and the carboxylic anhydride groups in the modifying agent carboxyl compound (C) to the total amount (ep) of the glycidyl groups and the β-methyl glycidyl groups in the lower-molecular-weight copolymer (a-S) to be modified, has been set to 1.0 or less. Previously setting the above molar ratio (ac)/(ep) to 1.0 or less, is advantageous since it eliminates the risk that the modified copolymer (a-S) gives a gel polymer which is insoluble in the organic solvents and cannot be dissolved under heating at the time of blending with the unmodified copolymer (a-L) in a molten or dissolved state.

The molar ratio (ac) / (ep) is preferably within the range of, although not particularly limited to, 0.3 to 0.9, more preferably 0.4 to 0.7. The modified lower-molecular-weight copolymer (a-S) obtained as above and the unmodified higher-molecular-weight copolymer (a-L), both in the form of solutions in organic solvents, are introduced into a vacuum reactor all at once and the solvents are completely distilled away by heating with stirring in vacuo (alternatively the solvents of these solutions are individually removed and the residues are melt-kneaded together by means of an extruder), so that the modified lower-molecular-weight copolymer (a-S) and the unmodified higher-molecular-weight copolymer (a-L) can be blended with each other in a molten or dissolved state to give the glycidyl copolymer (a).

In the second modification method (Z2) to achieve the object of the invention with the low modification amounts, the glycidyl copolymer (a) is separated into two fractions of different molecular weights by reprecipitation with good and poor solvents, and the lower-molecular-weight fraction (a-S)' alone is modified with the carboxyl compound (C) and the modified lower-molecular-weight fraction (a-S)' is mixed with the unmodified higher-molecular-weight fraction (a-L)' and reblended with each other in a molten or dissolved state.

The glycidyl copolymer (a) used herein is preferably the one obtained by the batch solution polymerization using the organic solvent as in the first modification method (Z1) followed by complete removal of the solvent by distillation under reduced pressure in a vacuum reactor. The glycidyl copolymers (a) of the invention will completely dissolve in methyl ethyl ketone (MEK), so methyl ethyl ketone can be used as a good solvent. A typical example of the poor solvent is cyclohexane. The glycidyl copolymer (a) can be separated into two fractions of different molecular weights ad libitum by reprecipitation from a methyl ethyl ketone solution in cyclohexane with simple adjustments of compositional ratios of the solvents. As a result of the adjustments of the solvent compositional ratios, the higher-molecular-weight fraction (a-L)' of the glycidyl copolymer (a) can be separated, fractionated and recovered simply by decantation or centrifugal sedimentation. The recovered fraction can be heated with stirring under reduced pressure in a vacuum reactor, so that the solvent can be completely distilled away and the unmodified higher-molecular-weight fraction (a-L)' can be obtained.

The lower-molecular-weight fraction (a-S)' to be modified is recovered in the form of a solution in a methyl ethyl ketone/cyclohexane mixed solvent. The modification with the carboxyl compound (C) can be conducted by introducing the carboxyl compound (C) which is soluble in the methyl ethyl ketone/cyclohexane mixed solvent and heating the resulting solution; or by heating the solution of the lower-molecular-weight fraction (a-S)' in a vacuum reactor with stirring under reduced pressure to distil away the solvent and by mixing the resultant lower-molecular-weight fraction (a-S)' with the carboxyl compound (C) in a molten state in a reactor capable of heating and stirring either in the presence or absence of a solvent to effect modification. If enough residence time and temperature for the modification can be assured, the modification can be carried out by the reactive processing technique in an extruder. Likewise with the case of the first modification method (Z1), the termination time point of the modification can be readily judged by the disappearance time of the carboxyl groups and the carboxylic anhydride groups according to the known method of acid value measurement, in which case the molar ratio (ac) / (ep) of the total amount (ac) of the carboxyl groups and the carboxylic anhydride groups in the carboxyl compound (C) to the total amount (ep) of the glycidyl groups and the β-methyl glycidyl groups in the lower-molecular-weight fraction (a-S)' to be modified, has been set to 1.0 or less.. The molar ratio (ac)/(ep) is preferably within the range of, although not particularly limited to, 0.3 to 0.9, more preferably 0.4 to 0.7. Also likewise with the case of the first modification method (Z1) the unmodified higher-molecular-weight fraction (a-L)' and the modified lower-molecular-weight fraction (a-S)', both in the form of solutions in the organic solvents, are introduced into a vacuum reactor all at once and the solvents are completely distilled away by heating with stirring in vacuo (alternatively the solvents of these solutions are individually removed and the residues are melt-kneaded together by means of an extruder), so that the unmodified higher-molecular-weight fraction (a-L)' and the modified lower-molecular-weight fraction (a-S)' can be blended with each other in a molten or dissolved state to give the glycidyl copolymer (a). If the modification intends for the copolymers or fractions of all molecular weights, it can be simply effected based on the above methods (Z1) and (Z2) without the operations for molecular weight separation or fractionation.

The glycidyl group-containing acrylic resin (A) comprises at least one kind of the glycidyl copolymers (a) described above. In the case where the plural glycidyl copolymers (a) are used, they are blended beforehand with each other into one or two kinds of glycidyl copolymers (a) to make its handling easy and to increase practical convenience.

### Polyvalent Carboxyl Compound (B)

The polyvalent carboxyl compound (B) is an essential curing agent for the glycidyl group-containing acrylic resin (A).

The polyvalent carboxyl compound (B) as the curing agent component can be arbitrarily selected from aliphatic polybasic acids of 4 to 20 carbon atoms, dehydrated condensates thereof, and polyester resins having carboxyl groups as a main functional group.

Examples of the aliphatic polybasic acids include linear aliphatic dibasic acids, such as succinic acid, glutaric acid, adipic acid, pimelic acid, suberic acid, azelaic acid, sebacic acid, undecanedioic acid, dodecanedioic acid, brassylic acid, tetradecanedioic acid, pentadecanedioic acid, hexadecanedioic acid, heptadecanedioic acid, octadecanedioic acid and eicosanedioic acid; polybasic acids having 3 or more functional groups, such as butanetricarboxylic acid and butanetetracarboxylic acid; and dehydrated condensates of these acids. Of these, dodecanedioic acid, tetradecanedioic acid and sole dehydrated condensates thereof are preferable.

The polyester resins having carboxyl groups as a main functional group for use in the invention have at least 1.0 carboxyl group on average in one molecule, acid values of 20 to 200 (mgKOH/g), glass transition temperatures (Tg) of 20 to 80°C, and GPC number-average molecular weights (Mn) of 100 to 10,000 in terms of polystyrene. Those polyester resins are easily available. Examples of the polyester resins include commercially available polyester resins which are solid at room temperature, such as Albester 5140 (trade name, available from Eastman Chemical Company) for curing with TGIC (triglycidyl isocyanurate), Albester 5160 (trade name, available from Eastman Chemical Company) for curing with Primid XL-552 (trade name, β-hydroxyalkylamide, available from EMS-Chemie), and Albester 2230 (trade name, available from Eastman Chemical Company) for curing with bisphenol A epoxy resins.

Those carboxyl compounds (B) may be used individually or in combination of two or more kinds. However, the so-called "acrylic-polyester hybrid powder coatings" in which all or almost all the curing agents used therein are the polyester resins having carboxyl groups as a main functional group, are excluded from the subject matter of the invention regardless of whether or not such powder coatings can have sufficient compatibility with the polyesteric thermosetting powder coatings. This is because the invention premises to maintain the excellent properties of the coating films of the acrylic thermosetting powder coatings recognized in the art.

The molar ratio (AC)/(EP) of the total amount (AC) of the carboxyl groups and the carboxylic anhydride groups in the polyvalent carboxyl compound (B) to the total amount (EP) of the glycidyl groups and the β-methyl glycidyl groups in the glycidyl group-containing acrylic resin (A), is not particularly limited but is preferably within the range of 0.7 to 1.3, more preferably 0.8 to 1.1.

As for the correct mechanism that such kind of modification of glycidyl copolymers (a) with carboxyl compound (C) gives better compatibility with the polyesteric powder coating is unfortunately unclear because no analytical methods for directly proving the sufficient mixing condition on the molecular level have been established. But if the hypothesis of the present inventors is right, it can be assumed that graft-modification with carboxyl compound (C) could change the molecular structure of glycidyl copolymers to allow better compounding with polyvalent carboxyl compound (B) due to the improved efficiency of the polymer entanglement in the melt-kneading step. This assumption can be supported indirectly by the fact that cured film has no deterioration in the film properties, in other words, it has superior appearance, physical properties and chemical properties to conventional ones, although the reactive functional groups (glycidyl groups, etc.) for the thermosetting in the acrylic resin have already been lost (consumed) partially in advance by this modification with carboxyl compound (C). It' s natural to think the precise control of polymer structures of acrylic resins, for example, the balance between the length of the main chains and the side chains, the differentiation of the chemical character of the side chains from that of the main chains, monomer sequence of the main chain, the location of functional groups, etc. can change the homogeneity of the compounded powder coatings.

### Acrylic Thermosetting Powder Coating Compositions

The acrylic thermosetting powder coating composition of the invention can be obtained by compounding the glycidyl group-containing acrylic resin (A) and the polyvalent carboxyl compound (B) as a curing agent by a known compounding method, followed by conventional cooling, solidifying, grinding and classifying of the resultant compounds or particles. There is no specific limitation on the methods of formulating and compounding these components.

The compounding can be carried out by means of the conventional kneaders and the like, such as heating roller mills, heating kneaders, extruders, mixers (Banbury or transfer mixers) and calendering equipments, in appropriate combination. Kneading conditions (temperature, rotation numbers, atmosphere, etc.) can be appropriately adjusted in operating these machines .

The powder coating compound obtained as above can be optionally further ground to obtain the finer powder coating composition. The grinding can be conducted by a known method. For example, a hammer mill can be used in order to obtain the powder coating composition ranging in the average particle diameter from about 10 to 90 µm. The acrylic thermosetting powder coating composition (powder coating) is not particularly limited in the particle size, and the volume average particle diameter thereof may be within the technically conventional range of about 20 to 40 µm.

The acrylic thermosetting powder coating composition of the inventionmay optionally contain various additives suitable for general powder coatings within the limit not detrimental to the object of the invention.

For example, properties of the resultant coating films can be enhanced by appropriately adding synthetic resins, such as epoxy, polyester and polyamide resins, to the powder coating compositions. Other exemplary additives which can be appropriately used include pigments, flow additives, viscosity modifiers (thixotropy modifiers), antistatic agents, surface modifiers, gloss imparting agents, anti-blocking agents, plasticizers, ultraviolet light absorbers, light stabilizer, antioxidants, degassing agents, curing catalysts, and powder fluidity modifiers, etc.. The acrylic thermosetting powder coating compositions can be obtained as clear coatings by incorporation of pigments in small amounts. These clear coatings may be colored as far as their transparency can be maintained.

Once applied on substrates by appropriate coating method, such as electrostatic coating or fluidized bed coating, the acrylic thermosetting powder coating composition is heated so that a coating film (crosslinked cured film) can be formed as a result of thermosetting. The substrate may be a metal substrate of aluminum, steal, etc. and may have been pre-treated and/or undercoated. The baking is carried out usually at temperatures about 100 to 180°C, preferably about 120 to 160°C for approximately 10 to 60 minutes.

### EFFECT OF THE INVENTION

The present invention provides the acrylic thermosetting powder coating compositions which are obtainable with enhanced homogeneity by a conventional compounding technique to ensure appearance properties (smoothness, high gloss, etc.), physical properties (hardness, mar/scratch resistance, etc.) and chemical properties (acid resistance, solvent resistance, etc.) of the resultant coating films, and simultaneously which are improved in compatibility with the polyesteric thermosetting powder coatings.

### EXAMPLES

The present invention will be described in detail by the following Examples, but it shouldbe construed that the invention is in no way limited to those Examples.

In the following descriptions, "part(s)" and are by weight unless otherwise specified.

### Production Example 1

### Production of unmodified glycidyl copolymer (a1)

Xylene 66.7 parts was introduced into a four-necked flask equipped with a stirrer, a thermometer, a reflux condenser and a nitrogen introduction/exhaust tube, and was heated to the reflux temperature under stirring while purging the air in the flask with nitrogen.

A raw materials solution consisting of glycidyl methacrylate 30 parts, styrene 15 parts, methyl methacrylate 35 parts, normal butyl methacrylate 20 parts and a polymerization initiator: t-butylperoxy-2-ethylhexanoate 5.0 parts, was fed to the flask over a period of 5 hours. The contents were thereafter maintained at 100°C for 5 hours to copolymerize these monomers. Then the solvent of the resultant resin solution was removed to obtain an unmodified glycidyl copolymer (a1).

The copolymer (a1) had a GPC weight-average molecular weight (Mw) of 7060 in terms of polystyrene, a DSC actual glass transition temperature (Tg) of 48°C, and an epoxy equivalent of 486 (g/eq.) as analyzed by perchloric acid titration. The compositional ratio of the raw materials and these property values of the glycidyl copolymer (a1) are shown in Table 1.

### Production Example 2

### Production of unmodified glycidyl copolymer (a2)

An unmodified glycidyl copolymer (a2) was obtained in the same manner as in Production Example 1, except that the raw materials solution was prepared from glycidyl methacrylate 30 parts, styrene 15 parts, methyl methacrylate 45 parts, a monomer having hydroxyl groups in the molecule:
lactone-modified hydroxyethyl acrylate (Tone monomer M-100 (trade name), available from Union Carbide) 10 parts, and a polymerization initiator: t-butylperoxy-2-ethylhexanoate 4.0 parts.

The copolymer (a2) had a GPC weight-average molecular weight (Mw) of 8100 in terms of polystyrene, a DSC actual glass transition temperature (Tg) of 50°C, and an epoxy equivalent of 484 (g/eq.) as analyzed by perchloric acid titration. The compositional ratio of the raw materials and these property values of the glycidyl copolymer (a2) are shown in Table 1.

### Production Example 3

### Production of unmodified glycidyl copolymer (a3)

An unmodified glycidyl copolymer (a3) was obtained in the same manner as in Production Example 1, except that the raw materials solution was prepared from glycidyl methacrylate 30 parts, styrene 15 parts, methyl methacrylate 32 parts, a monomer having hydroxyl groups in the molecule:
lactone-modified hydroxyethyl methacrylate (FM3 (trade name), available from Daicel Chemical Industries, Ltd.) 8 parts, 2-hydroxyethyl methacrylate 15 parts, and a polymerization initiator: t-butylperoxy-2-ethylhexanoate 4.0 parts.

The copolymer (a3) had a GPC weight-average molecular weight (Mw) of 8250 in terms of polystyrene, a DSC actual glass transition temperature (Tg) of 43°C, and an epoxy equivalent of 480 (g/eq.) as analyzed by perchloric acid titration. The compositional ratio of the raw materials and these property values of the glycidyl copolymer (a3) are shown in Table 1.

### Production Example 4

### Production of unmodified glycidyl copolymer (a4)

An unmodified glycidyl copolymer (a4) was obtained in the same manner as in Production Example 1, except that the raw materials solution was prepared from β-methyl glycidyl methacrylate 33 parts, styrene 30 parts, methyl methacrylate 30 parts, normal butyl acrylate 7 parts, and a polymerization initiator: t-butylperoxy-2-ethylhexanoate 3.5 parts.

The copolymer (a4) had a GPC weight-average molecular weight (Mw) of 10200 in terms of polystyrene, a DSC actual glass transition temperature (Tg) of 55°C, and an epoxy equivalent of 482 (g/eq.) as analyzed by perchloric acid titration. The compositional ratio of the raw materials and these property values of the glycidyl copolymer (a4) are shown in Table 1.

### Production Example 5

### Production of unmodified glycidyl copolymer (a5)

An unmodified glycidyl copolymer (a5) was obtained in the same manner as in Production Example 1, except that the raw materials solution was prepared from glycidyl methacrylate 45 parts, styrene 15 parts, methyl methacrylate 35 parts, normal butyl methacrylate 5 parts, and a polymerization initiator: t-butylperoxy-2-ethylhexanoate 7.5 parts.

The copolymer (a5) had a GPC weight-average molecular weight (Mw) of 5580 in terms of polystyrene, a DSC actual glass transition temperature (Tg) of 42°C, and an epoxy equivalent of 328 (g/eq.) as analyzed by perchloric acid titration. The compositional ratio of the raw materials and these property values of the glycidyl copolymer (a5) are shown in Table 1.

### Production Example 6

### Production of glycidyl copolymer (a6) modified in all molecular weights

The unmodified glycidyl copolymer (a1) obtained in Production Example 1 was modified in all molecular weights with the carboxyl compound (C) as follows.

Xylene 40 parts, isopropyl alcohol 40 parts and the glycidyl copolymer (a1) 100 parts were introduced into an autoclave equipped with a stirrer and a thermometer. The contents were heated to 120°C under stirring in the closed autoclave.

A solution of dimethylolbutanoic acid 1.5 parts in methanol 15 parts was continuously fed to the autoclave, and thereafter the contents were maintained at 120°C for 5 hours to carry out the modification. As a result of the modification, the acid value was reduced to nearly 0 mgKOH/g as measured by a conventional method.

The above addition of dimethylolbutanoic acid was made in the set amount of 5 mol% based on the glycidyl groups in the copolymer (a1). Then the solvent of the modified resin solution was removed to obtain a glycidyl copolymer (a6) with overall modification.

The copolymer (a6) had a GPC weight-average molecular weight (Mw) of 7250 in terms of polystyrene, a DSC actual glass transition temperature (Tg) of 49°C, and an epoxy equivalent of 512 (g/eq.) as analyzed by perchloric acid titration. The compositional ratio of the raw materials and these property values of the glycidyl copolymer (a6) are shown in Table 1.

The compositional ratio of the raw materials is the weight balance of monomers based on their total weight as 100 parts by weight.

### Production Example 7

### Production of glycidyl copolymer (a7) modified in all molecular weights

The unmodified glycidyl copolymer (a3) obtained in Production Example 3 was modified in all molecular weights with the carboxyl compound (C) as follows.

Xylene 40 parts, isopropyl alcohol 40 parts and the glycidyl copolymer (a3) 100 parts were introduced into an autoclave equipped with a stirrer and a thermometer. The contents were heated to 120°C under stirring in the closed autoclave.

A solution of dimethylolpropionic acid 3 parts in methanol 40 parts was continuously fed to the autoclave, and thereafter the contents were maintained at 120°C for 6 hours to carry out the modification. As a result of the modification, the acid value was reduced to nearly 0 mgKOH/g as measured by a conventional method.

The above addition of dimethylolpropionic acid was made in the set amount of 11 mol% based on the glycidyl groups in the copolymer (a3). Then the solvent of the modified resin solution was removed to obtain a glycidyl copolymer (a7) with overall modification.

The copolymer (a7) had a GPC weight-average molecular weight (Mw) of 8400 in terms of polystyrene, a DSC actual glass transition temperature (Tg) of 44°C, and an epoxy equivalent of 553 (g/eq.) as analyzed by perchloric acid titration. The compositional ratio of the raw materials and these property values of the glycidyl copolymer (a7) are shown in Table 1.

The compositional ratio of the raw materials is the weight balance of monomers based on their total weight as 100 parts by weight.

### Production Example 8

### Production of modified glycidyl copolymer (a8) by the selective modification method (Z1)

To carry out the selective modification with the carboxyl compound (C), the unmodified glycidyl copolymer (a4) obtained in Production Example 4 was used as a higher-molecular-weight glycidyl copolymer (a8-L), and (a8-S), which should be modified and is identical with the glycidyl copolymer (a8-L)=(a4) in the kind of the ethylenically unsaturated monomers copolymerized with glycidyl methacrylate and/or β-methyl glycidyl methacrylate and also in the weight ratio of these monomers and differs from the glycidyl copolymer (a8-L)=(a4) in the molecular weight, was newly prepared.

Specifically, xylene 66.7 parts was introduced into a four-necked flask equipped with a stirrer, a thermometer, a reflux condenser and a nitrogen introduction/exhaust tube, and was heated to the reflux temperature under stirring while purging the air in the flask with nitrogen.

A raw materials solution consisting of β-methyl glycidyl methacrylate 33 parts, styrene 30 parts, methyl methacrylate 30 parts, normal butyl acrylate 7 parts and a polymerization initiator: t-butylperoxy-2-ethylhexanoate 14 parts, was fed to the flask over a period of 5 hours. The contents were thereafter maintained at 100°C for 5 hours to copolymerize these monomers.

Xylene 150 parts was further added to the reaction solution in the flask and homogeneously mixed therewith by stirring. The resultant xylene solution of the lower-molecular-weight glycidyl copolymer (a8-S) had an epoxy equivalent of 1540 (g/eq.).

Then 100 parts of the xylene solution of the glycidyl copolymer (a8-S) was introduced into a three-necked flask equipped with a stirrer, a thermometer and a reflux condenser. After addition of a saturated fatty acid: capric acid (decenoic acid) 8 parts, the contents were heated to the reflux temperature and thereafter maintained at the temperature for 1 hour to carry out the modification. As a result of the modification, the acid value was reduced to nearly 0 mgKOH/g as measured by a conventional method.

The above addition of capric acid was made in the set amount of 70 mol% based on the β-methyl glycidyl groups of the glycidyl copolymer (a8-S) in the xylene solution.

Then the unmodified glycidyl copolymer (a8-L)=(a4) 50 parts was added to the xylene solution of the modified glycidyl copolymer (a8-S), and xylene was completely distilled away by heating at 150°C under reduced pressure.

As described above, a glycidyl copolymer (a8) was obtained in which the unmodified higher-molecular-weight copolymer (a8-L)=(a4) and the modified lower-molecular-weight copolymer (a8-S) were homogeneously blended with each other in a molten state.

The copolymer (a8) had a GPC weight-average molecular weight (Mw) of 9040 in terms of polystyrene, a DSC actual glass transition temperature (Tg) of 46°C, and an epoxy equivalent of 745 (g/eq.) as analyzed by perchloric acid titration. The compositional ratio of the raw materials and these property values of the glycidyl copolymer (a8) are shown in Table 1.

The compositional ratio of the raw materials is the weight balance of monomers based on their total weight as 100 parts by weight. Of the total β-methyl glycidyl methacrylate used in production of the glycidyl copolymer (a8), 27 mol% had been consumed by the capric acid.

### Production Example 9

### Production of modified glycidyl copolymer (a9) by the selective modification method (Z1)

To carry out the selective modification with the carboxyl compound (C), the unmodified glycidyl copolymer (a5) obtained in Production Example 5 was used as a higher-molecular-weight glycidyl copolymer (a9-L), and (a9-S), which should be modified and is identical with the glycidyl copolymer (a9-L)=(a5) in the kind of the ethylenically unsaturated monomers copolymerized with glycidyl methacrylate and/or β-methyl glycidyl methacrylate and also in the weight ratio of these monomers and differs from the glycidyl copolymer (a9-L)=(a5) in the molecular weight, was newly prepared.

Specifically, xylene 70 parts was introduced into a four-necked flask equipped with a stirrer, a thermometer, a reflux condenser and a nitrogen introduction/exhaust tube, and was heated to the reflux temperature under stirring while purging the air in the flask with nitrogen.

A raw materials solution consisting of glycidyl methacrylate 45 parts, styrene 15 parts, methyl methacrylate 35 parts, normal butyl methacrylate 5 parts and a polymerization initiator: t-butylperoxy-2-ethylhexanoate 15 parts, was fed to the flask over a period of 5 hours. The contents were thereafter maintained at 100°C for 5 hours to copolymerize these monomers.

Xylene 200 parts was further added to the reaction solution in the flask and homogeneously mixed therewith by stirring. The resultant xylene solution of the lower-molecular-weight glycidyl copolymer (a9-S) had an epoxy equivalent of 1193 (g/eq.).

Then 100 parts of the xylene solution of the glycidyl copolymer (a9-S) was introduced into a three-necked flask equipped with a stirrer, a thermometer and a reflux condenser. After addition of an aliphatic oxyacid: 12-hydroxystearic acid 13 parts, the contents were heated to the reflux temperature and thereafter maintained at the temperature for 1 hour to carry out the modification. As a result of the modification, the acid value was reduced to nearly 0 mgKOH/g as measured by a conventional method.

The above addition of 12-hydroxystearic acid was made in the set amount of 50 mol% based on the glycidyl groups of the glycidyl copolymer (a9-S) in the xylene solution.

Then the unmodified glycidyl copolymer (a9-L)=(a5) 120 parts was added to the xylene solution of the modified glycidyl copolymer (a9-S), and xylene was completely distilled away by heating at 150°C under reduced pressure.

As described above, a glycidyl copolymer (a9) was obtained in which the unmodified higher-molecular-weight copolymer (a9-L) = (a5) and the modified lower-molecular-weight copolymer (a9-S) were homogeneously blended with each other in a molten state.

The copolymer (a9) had a GPC weight-average molecular weight (Mw) of 5020 in terms of polystyrene, a DSC actual glass transition temperature (Tg) of 39°C, and an epoxy equivalent of 398 (g/eq.) as analyzed by perchloric acid titration. The compositional ratio of the raw materials and these property values of the glycidyl copolymer (a9) are shown in Table 1.

The compositional ratio of the raw materials is the weight balance of monomers based on their total weight as 100 parts by weight. Of the total glycidyl methacrylate used in production of the glycidyl copolymer (a9), 9 mol% had been consumed by the 12-hydroxystearic acid.

### Production Example 10

### Production of modified glycidyl copolymer (a10) by the selective modification method (Z2)

The unmodified glycidyl copolymer (a5) given by Production Example 5 was used and fractionated by reprecipitation into (a10-S)' having lower-molecular-weight and (a10-L)' having higher-molecular weight. Thereafter, (a10-S)' was modified with the carboxyl compound (C).

Specifically, the glycidyl copolymer (a5) 100 parts was completely dissolved in a good solvent methyl ethyl ketone 120 parts, and the resulting solution was poured into a cyclohexane solution 850 parts to effect reprecipitation. The precipitates were separated from the solution by centrifugation and decantation, and the resultant solution of the lower-molecular-weight fraction (a10-S)' was vacuum dried at 50°C and 10 Torr or below to remove the solvent completely.

The lower-molecular-weight fraction (a10-S)' obtained as above was in the form of viscous liquid at room temperature. The yield was 9 wt%, i.e., 9 parts. The fraction (a10-S)' had a GPC weight-average molecular weight (Mw) of 1380 in terms of polystyrene, and an epoxy equivalent of 331 (g/eq.) as analyzed by perchloric acid titration. The residue resulting from the separation was recovered as a cake 93 parts comprising the higher-molecular-weight fraction (a10-L)' 91 parts (91 wt% yield), methyl ethyl ketone, and cyclohexane.

Thereafter the lower-molecular-weight fraction (a10-S)' 9 parts and azelaic acid 1 part were introduced into a four-necked flask equipped with a stirrer, a thermometer, a reflux condenser and a nitrogen introduction/exhaust tube, and were heated to 150°C and thereafter mixed with each other in a molten state for 30 minutes while purging the air in the flask with nitrogen. As a result of the above modification, the acid value was reduced to nearly 0 mgKOH/g as measured by a conventional method. The modified fraction was filtered under pressure through a 200-mesh metal filter outside the flask, and then placed back in the flask.

The above use of azelaic acid was made in the set amount of 40 mol% in terms of carboxyl groups based on the glycidyl groups in the lower-molecular-weight fraction (a10-S)' 9 parts.

The cake 93 parts including the higher-molecular-weight fraction (a10-L)' 91 parts, and further toluene 200 parts were added to the molten mixture of the modified fraction (a10-S)' . The contents in the flask were heated to 140°C under stirring and thereafter the solvents were completely distilled away.

As described above, a glycidyl copolymer (a10) was obtained in which the unmodified higher-molecular-weight fraction (a10-L)' and the modified lower-molecular-weight fraction (a10-S)' were homogeneously blended with each other in a molten state.

The copolymer (a10) had a GPC weight-average molecular weight (Mw) of 5810 in terms of polystyrene, a DSC actual glass transition temperature (Tg) of 43°C, and an epoxy equivalent of 343 (g/eq.) as analyzed by perchloric acid titration. The compositional ratio of the raw materials and these property values of the glycidyl copolymer (a10) are shown in Table 1.

The compositional ratio of the raw materials is the weight balance of monomers based on their total weight as 100 parts by weight. Of the total glycidyl methacrylate used in production of the glycidyl copolymer (a10), 3.5 mol% had been consumed by the azelaic acid.

### Production Example 11

### Production of modified glycidyl copolymer (a11) by the selective modification method (Z2)

The unmodified glycidyl copolymer (a5) 100 parts was fractionated by reprecipitation in the same manner as in Production Example 10 and (a11-S)' as lower-molecular-weight fraction and (a11-L)' as higher-molecular weight fraction were prepared.
That is, 9 parts of a lower-molecular-weight fraction (a11-S)' in the form of viscous liquid at room temperature and 93 parts of a cake comprising a higher-molecular-weight fraction (a11-L)' 91 parts and residual solvents (methyl ethyl ketone and cyclohexane) 2 parts were prepared.

Into a four-necked flask equipped with a stirrer, a thermometer, a reflux condenser and a nitrogen introduction/exhaust tube, the lower-molecular-weight fraction (a11-S)' 9 parts was introduced together with 13 parts of the polyester resin having carboxyl groups as main functional groups: Albester 5140 (trade name, available from Eastman Chemical Company) which was solid at room temperature and had at least 1.0 carboxyl group on average in the molecule, an acid value of 35 (mgKOH/g), and a glass transition temperature (Tg) of 67°C. The contents were heated to 150°C and thereafter mixed with each other in a molten state for 30 minutes while purging the air in the flask with nitrogen. As a result of the above modification, the acid value was reduced to nearly 0 mgKOH/g as measured by a conventional method. The modified fraction was filtered under pressure through a 200-mesh metal filter outside the flask, and then placed back in the flask.

The above use of the polyester resin was made in the set amount of 30 mol% in terms of carboxyl groups based on the glycidyl groups in the lower-molecular-weight fraction (a11-S)' 9 parts.

The cake 93 parts including the higher-molecular-weight fraction (a11-L)' 91 parts, and further toluene 200 parts were added to the molten mixture of the modified fraction (a11-S)'. The contents in the flask were heated to 140°C under stirring and thereafter the solvents were completely distilled away.

As described above, a glycidyl copolymer (a11) was obtained in which the unmodified higher-molecular-weight fraction (a11-L)' and the modified lower-molecular-weight fraction (a11-S)' were homogeneously blended with each other in a molten state.

The copolymer (a11) had a GPC weight-average molecular weight (Mw) of 6150 in terms of polystyrene, a DSC actual glass transition temperature (Tg) of 45°C, and an epoxy equivalent of 381 (g/eq.) as analyzed by perchloric acid titration. The compositional ratio of the raw materials and these property values of the glycidyl copolymer (a11) are shown in Table 1.

The compositional ratio of the raw materials is the weight balance of monomers based on their total weight as 100 parts by weight. Of the total glycidyl methacrylate used in production of the glycidyl copolymer (a11), 2.5 mol% had been consumed by the polyester resin.

### Example 1 (reference only)

Introduced all at once into a Henschel mixer (produced by MITSUI MINING COMPANY. LIMITED) were the glycidyl group-containing acrylic resin (A) (comprising the glycidyl copolymers (a1), (a4) and (a6) in amounts of 21 parts, 25 parts and 37 parts respectively), the curing polyvalent carboxyl compound (B): dodecanedioic acid 17 parts (hereinafter, the total of the glycidyl group-containing acrylic resin (A) and the polyvalent carboxyl compound (B) is 100 parts by weight), titanium oxide Tipure R-960 (trade name, available from Du Pont Kabushiki Kaisha) 25 parts, ultraviolet light absorber TINUVIN CGL 1545 (trade name, available from Ciba Specialty Chemicals Inc.) 2 parts, hindered amine light stabilizer TINUVIN CGL 052 (trade name, available from Ciba Specialty Chemicals Inc.) 1 part, benzoin (degassing agent) 0.5 part and a flow additive 0.7 part. The contents were dry mixed at room temperature for 3 minutes and melt-kneaded with a single-screw extruder (produced by Coperion) at 115°C. The resulting mixture was solidified, ground and classified.

The particle size of the coating composition thus obtained was measured with SALAD 2000 (available from Shimadzu Corporation), and was found to be 26 µm in terms of the volume average particle diameter.

The flow additive used herein was Resimix RL-4 (trade name, available from Mitsui Chemicals, Inc.). The glycidyl group-containing acrylic resin (A) comprising the three kinds of glycidyl copolymers (a1), (a4) and (a6), had a modification amount of 2 mol% (i.e., the rate of the glycidyl and β-methyl glycidyl groups modified by the carboxyl compound (C) to all the glycidyl and β-methyl glycidyl groups in the acrylic resin (A)). No ethylenically unsaturated monomers having hydroxyl groups were used, so the amount thereof to the monomers was 0 wt%. The molar ratio (AC)/(EP) of the carboxyl groups (AC) in the curing agent dodecanedioic acid to the total of the glycidyl and β-methyl glycidyl groups (EP) in the glycidyl group-containing acrylic resin (A) was 0.9. These design parameters and property values of the obtained acrylic thermosetting powder coating composition are shown in Table 2.

### Examples 2-4

In each Example, an acrylic thermosetting powder coating composition was obtained in the same manner as in Example 1 except that the combination of glycidyl copolymers (a) to constitute the glycidyl group-containing acrylic resin (A) and the molar ratio (AC)/(EP) were changed as shown in Table 2. The design parameters and property values of the obtained thermosetting powder coating compositions are shown in Table 2.

### Example 5

Introduced all at once into a Henschel mixer (produced by MITSUI MINING COMPANY. LIMITED) were the glycidyl group-containing acrylic resin (A) (comprising the glycidyl copolymers (a5) and (a9) in amounts of 41 parts and 27 parts respectively), the curing polyvalent carboxyl compound (B): commercial product corresponding to dodecanedioic acid linear polyacid anhydride (Additol VXL1381 (trade name), available from Solutia) 32 parts, ultraviolet light absorber TINUVIN CGL 1545 (trade name, available from Ciba Specialty Chemicals Inc.) 2 parts, hindered amine light stabilizer TINUVIN CGL 052 (trade name, available from Ciba Specialty Chemicals Inc.) 1 part, benzoin 0.5 part, a flow additive 0.7 part and a curing catalyst tetrabutylphosphonium bromide 0.2 part. The contents were dry mixed at room temperature for 3 minutes and melt-kneaded with a single-screw extruder (produced by coperion) at 70°C. The resulting mixture was solidified, ground and classified.

The particle size of the coating composition thus obtained was measured with SALAD 2000 (available from Shimadzu Corporation), and was found to be 23 µm in terms of the volume average particle diameter.

The flow additive used herein was Resimix RL-4 (trade name, available from Mitsui Chemicals, Inc.). The glycidyl group-containing acrylic resin (A) comprising the two kinds of glycidyl copolymers (a5) and (a9), had a modification amount of 4 mol% (i.e., the rate of the glycidyl groups modified by the carboxyl compound (C) to all the glycidyl groups in the acrylic resin (A)). No ethylenically unsaturated monomers having hydroxyl groups were used, so the amount thereof to the monomers was 0 wt%. The molar ratio (AC)/(EP) of the total of the carboxyl groups and carboxylic anhydride groups (AC) in the dodecanedioic acid linear polyacid anhydride to all the glycidyl groups (EP) in the glycidyl group-containing acrylic resin (A) was 1.0. These design parameters and property values of the obtained acrylic thermosetting powder coating composition are shown in Table 2.

### Examples 6-7

In each Example, an acrylic thermosetting powder coating composition was obtained in the same manner as in Example 5 except that the combination of glycidyl copolymers (a) to constitute the glycidyl group-containing acrylic resin (A) and the molar ratio (AC)/(EP) were changed as shown in Table 2. The design parameters and property values of the obtained thermosetting powder coating compositions are shown in Table 2.

### Example 8

Introduced all at once into a Henschel mixer (produced by MITSUI MINING COMPANY. LIMITED) were the glycidyl group-containing acrylic resin (A) (comprising the glycidyl copolymers (a3), (a4) and (a8) in amounts of 42 parts, 21 parts and 20 parts respectively), the curing polyvalent carboxyl compound (B) : tetradecanedioic acid 17 parts, carbonblackMA100 (trade name, available from Mitsubishi Chemical Corporation) 3 parts, ultraviolet light absorber TINUVIN CGL 1545 (trade name, available from Ciba Specialty Chemicals Inc.) 2 parts, hindered amine light stabilizer TINUVIN CGL 052 (trade name, available from Ciba Specialty Chemicals Inc.) 1 part, benzoin 0.5 part and a flow additive 0.7 part. The contents were dry mixed at room temperature for 3 minutes and melt-kneaded with a single-screw extruder (produced by Coperion) at 115°C. The resulting mixture was solidified, ground and classified.

The particle size of the coating composition thus obtained was measured with SALAD 2000 (available from Shimadzu Corporation), and was found to be 25 µm in terms of the volume average particle diameter.

The flow additive used herein was Resimix RL-4 (trade name, available from Mitsui Chemicals, Inc.). The glycidyl group-containing acrylic resin (A) comprising the three kinds of glycidyl copolymers (a3), (a4) and (a8), had a modification amount of 6 mol% (i.e., the rate of the glycidyl and β-methyl glycidyl groups modified by the carboxyl compound (C) to all the glycidyl and β-methyl glycidyl groups in the acrylic resin (A)). An ethylenically unsaturated monomer having hydroxyl groups was used in an amount of 12 wt% of the total monomers. The molar ratio (AC)/(EP) of all the carboxyl groups (AC) in the tetradecanedioic acid to the total of the glycidyl and β-methyl glycidyl groups (EP) in the glycidyl group-containing acrylic resin (A) was 0.8. These design parameters and property values of the obtained acrylic thermosetting powder coating composition are shown in Table 2.

### Comparative Examples 1-4

Thermosetting powder coating compositions were obtained in the same manners as in Example 1 in Comparative Examples 1 and 2, as in Example 5 in Comparative Example 3, and as in Example 8 in Comparative Example 4. The design parameters and property values of the obtained acrylic thermosetting powder coating compositions are shown in Table 2.

The thermosetting powder coating compositions obtained in Examples 1-8 and Comparative Examples 1-4 were measured for the compatibility with the polyesteric thermosetting powder coatings by the following method.

### (Method of evaluating the compatibility with the polyesteric thermosetting powder coatings)

For the evaluation of the compatibility with the polyesteric thermosetting powder coatings, the every acrylic thermosetting powder coating composition 0.2 wt% was sufficiently dry mixed with each of the two kinds of typical polyesteric thermosetting powder coatings obtained as mentioned later.

Then an electrodeposited, zinc phosphate-treated steel panel having 0.8 mm thickness was directly coated with the above-prepared coating mixture by corona-charging-type electrostatic spray coating so that the thermoset coating film obtained by baking would have an average film thickness of 70 µm. Thereafter the coating mixture sprayed on the steel panel was heated at 160°C for 30 minutes to form the coating film.

The above spray coating and baking were carried out in a clean room (available from HOSOKAWAMICRON CORPORATION) of cleanness class 10000 (FS209D) to shut out all foreign substances in the outside air. The number of craters on the baked coating film was visually counted, and evaluation was made based on the number of craters found within one square meter of the coating film. The results are shown in Table 3.

### (Preparation of the polyesteric thermosetting powder coatings)

### (1) polyester-TGIC powder coating composition

Introduced all at once into a Henschel mixer (produced by MITSUI MINING COMPANY. LIMITED) were polyester resin Albester 5140 (trade name, available from Eastman Chemical Company, acid value: 35 mgKOH/g) 94 parts by weight, triglycidyl isocyanurate (TGIC) 6 parts by weight, titanium oxide Tipure R-960 (trade name, available from Du Pont Kabushiki Kaisha) 40 parts by weight, ResimixRL-4 (trade name, available from Mitsui Chemicals, Inc.) 0.7 part by weight and benzoin 0.5 part by weight. The contents were dry mixed at room temperature for 3 minutes and melt-kneaded with a single-screw extruder (produced by Coperion) at 120°C. The resulting mixture was solidified, ground and classified.

The particle size of the polyesteric thermosetting coating composition thus obtained was measured with SALAD 2000 (available from Shimadzu Corporation), and was found to be 27 µm in terms of the volume average particle diameter.

### (2) polyester-Primid powder coating composition

Introduced all at once into a Henschel mixer (produced by MITSUI MINING COMPANY. LIMITED) were polyester resin Albester 5160 (trade name, available from Eastman Chemical Company, acid value: 36 mgKOH/g) 94.5 parts by weight, Primid XL-552 (trade name, available from EMS-Chemie, OH equivalent: 84 g/eq.) 5.5 parts by weight, titanium oxide Tipure R-960 (trade name, available from Du Pont Kabushiki Kaisha) 40 parts by weight, Resimix RL-4 (trade name, available from Mitsui Chemicals, Inc.) 0.7 part by weight and benzoin 0.5 part by weight. The contents were dry mixed at room temperature for 3 minutes andmelt-kneaded with a single-screw extruder (produced by Coperion) at 120°C. The resulting mixture was solidified, ground and classified.

The particle size of the polyesteric thermosetting coating composition thus obtained was measured with SALAD 2000 (available from Shimadzu Corporation), and was found to be 25 µm in terms of the volume average particle diameter.

Separately, the other properties of the coating films of the acrylic thermosetting powder coating compositions obtained in Examples and Comparative Examples were evaluated as follows.

A undercoated steel panel was coated with each of the acrylic thermosetting powder coating compositions by corona-charging-type electrostatic spraying so that the thermoset coating film obtained by baking would have an average film thickness of 70 µm. Thereafter the every coating composition sprayed on the undercoated panel was heated at 160°C for 30 minutes to form the coating film.

The undercoated steel panel used herein had been prepared by coating an electrodeposited, zinc phosphate-treated steel panel having 0.8 mm thickness with a solvent-borne polyester-melamine thermosetting black coating and baking the black coating at 170°C for 30 minutes to form a 20 µm undercoating film.

The crosslinked cured coating films by baking of the acrylic thermosetting powder coating compositions were measured for the following properties. The results are shown in Table 3.

### (1) Gloss value

The 60° gloss value was measured with a gloss meter (produced by BYK-Gardner).

### (2) Pencil hardness

A pencil scratch test was conducted in accordance with JIS K5400-6.14 to evaluate the pencil hardness.

### (3) Acid resistance

A 10 vol% sulfuric acid solution 1 ml was dropped on the coating film and left to stand for a day at room temperature. Thereafter the sulfuric acid drop was wiped away and the exposed coating film was visually observed to evaluate the appearance based on the following criteria.

### (Evaluation criteria)

AA: no trace left
BB: slight trace left
CC: significant trace left

### (4) Solvent resistance

The coating film was scrubbed back and forth (counted as one time) with a xylene-containing gauze fifty times. Thereafter the coating film was observed for the evaluation based on the following criteria.

### (Evaluation criteria)

AA: no trace left
BB: slight trace left
CC: significant trace left

**Table 1**

| Glycidyl copolymer | (a1)* | (a2)* | (A3) * | (a4)* | (a5)* | (a6)* | (a7)* | (a8) | (a9) | (a10) | (a11)* |
|---|---|---|---|---|---|---|---|---|---|---|---|
| Compositional ratio (parts by weight) | | | | | | | | | | | |
| Glycidyl group-containing monomer Glycidyl methacrylate | 30 | 30 | 30 | | 45 | 30 | 30 | | 45 | 45 | 45 |
| β-methyl glycidyl methacrylate | | | | 33 | | | | 33 | | | |
| Hydroxyl group-containing monomer Lactone-modified hydroxyethyl acrylate | | 10 | | | | | | | | | |
| Lactone-modified hydroxyethyl methacrylate | | | 8 | | | | 8 | | | | |
| 2-hydroxyethyl methacrylate | | | 15 | | | | 15 | | | | |

| Other monomers | | | | | | | | | | | |
|---|---|---|---|---|---|---|---|---|---|---|---|
| Styrene | 15 | 15 | 15 | 30 | 15 | 15 | 15 | 30 | 15 | 15 | 15 |
| Methyl methacrylate | 35 | 45 | 32 | 30 | 35 | 35 | 32 | 30 | 35 | 35 | 35 |
| Normal butyl methacrylate | 20 | | | | 5 | 20 | | | 5 | 5 | 5 |
| Normal butyl acrylate | | | | 7 | | | | 7 | | | |
| Polymerization initiator | | | | | | | | | | | |
| t-butylperoxy-2-ethylhexanoate | 5.0 | 4.0 | 4.0 | 3.5 | 7.5 | 5.0 | 4.0 | (7.5) | (6.9) | (7.5) | (7.5) |

| Carboxyl compound (c3) | | | | | | | | | | | |
|---|---|---|---|---|---|---|---|---|---|---|---|
| Dimethylolbutanoic acid | | | | | | 1.5 | | | | | |
| Dimethylolpropionic acid | | | | | | | 3 | | | | |
| Capric acid | | | | | | | | 10 | | | |
| 12-hydroxystearic acid | | | | | | | | | 9 | | |
| azelaic acid | | | | | | | | | | 1 | |
| polyester resin | | | | | | | | | | | 13.5 |
| Modification amount (mol%) of glycidyl groups, etc. of glycidyl copolymers (a) | | | | | | 5 | 11 | 27 | 9 | 3.5 | 2.5 |
| Actual glass transition temperature Tg (°C) | 48 | 50 | 43 | 55 | 42 | 49 | 44 | 46 | 39 | 43 | 45 |
| Actual Mw | 7060 | 8100 | 8250 | 10200 | 5580 | 7250 | 8400 | 9040 | 5020 | 5810 | 6150 |
| Actual EEQ (g/eq.) | 486 | 484 | 480 | 482 | 328 | 512 | 553 | 745 | 398 | 343 | 381 |

| | | | | | | | | | | | |
|---|---|---|---|---|---|---|---|---|---|---|---|
| * Referential Examples. | | | | | | | | | | | |

**Table 2**

| | | Example | | | | | | | | Comparative Example | | | |
|---|---|---|---|---|---|---|---|---|---|---|---|---|---|
| | | 1* | 2* | 3 | 4 | 5 | 6 | 7 | 8 | 1 | 2 | 3 | 4 |
| Composition of thermosetting powder coating composition (parts by weight) | | | | | | | | | | | | | |
| Glycidyl copolymer | (a1) | 21 | 33 | 59 | | | | | | 58 | | | |
| | (a2) | | | | 67 | | | | | | | | |
| | (a3) | | | | | | | | 42 | | | | 43 |
| | (a4) | 25 | 25 | | | | | | 21 | 25 | 25 | | |
| | (a5) | | | | | 41 | | 39 | | | | 67 | |
| | (a6) | 37 | | | | | | | | | | | |
| | (a7) | | 25 | | | | | | | | 58 | | |
| | (a8) | | | 24 | 16 | | | | 20 | | | | 42 |
| | (a9) | | | | | 27 | | | | | | | |
| | (a10) | | | | | | 67 | | | | | | |
| | (a11) | | | | | | | 26 | | | | | |
| Polyvalent carboxyl compound (B) | | | | | | | | | | | | | |
| Dodecanedioic acid | | 17 | 17 | 17 | 17 | | | | | 17 | 17 | | |
| Tetradecanedioic acid | | | | | | | | | 17 | | | | 15 |
| Dodecanedioic acid linear polyacid | | | | | | 32 | 33 | 35 | | | | 33 | |
| anhydride | | | | | | | | | | | | | |
| Titanium Dioxide (R-960) | | 25 | 25 | 25 | 25 | | | | | 25 | 25 | | |
| Carbon black (MA100) | | | | | | | | | 3 | | | | 3 |
| Ultraviolet light absorber (CGL 1545) | | 2 | 2 | 2 | 2 | 2 | 2 | 2 | 2 | 2 | 2 | 2 | 2 |
| Light stabilizer (CGL 052) | | 1 | 1 | 1 | 1 | 1 | 1 | 1 | 1 | 1 | 1 | 1 | 1 |
| Degassing agent (benzoin) | | 0.5 | 0.5 | 0.5 | 0.5 | 0.5 | 0.5 | 0.5 | 0.5 | 0.5 | 0.5 | 0.5 | 0.5 |
| Flow additive (Resimix RL-4) | | 0.7 | 0.7 | 0.7 | 0.7 | 0.7 | 0.7 | 0.7 | 0.7 | 0.7 | 0.7 | 0.7 | 0.7 |
| Curing catalyst (tetrabutylphosphonium bromide) | | | | | | 0.2 | 0.2 | 0.2 | | | | 0.2 | |
| Molar ratio (AC)/(EP) | | 0.9 | 0.9 | 1.0 | 0.9 | 1.0 | 1.0 | 1.1 | 0.8 | 0.9 | 0.9 | 1.0 | 0.8 |
| Amount (mol%) of modified (consumed) glycidyl and | | | | | | | | | | | | | |
| β-methyl glycidyl groups in acrylic resin (A) | | 2 | 3 | 8 | 5 | 4 | 3 | 1 | 6 | 0 | 7 | 0 | 13 |
| Total content (wt%) of hydroxy group-containing monomer(s) in acrylic resin (A) | | 0 | 7 | 0 | 8 | 0 | 0 | 0 | 12 | 0 | 16 | 0 | 12 |
| volume average particle diameter of powder coating (µm) | | 26 | 24 | 23 | 27 | 23 | 25 | 23 | 25 | 28 | 25 | 24 | 25 |

| | | | | | | | | | | | | | |
|---|---|---|---|---|---|---|---|---|---|---|---|---|---|
| * reference only | | | | | | | | | | | | | |

**Table 3**

| | Example | | | | | | | | Comparative Example | | | |
|---|---|---|---|---|---|---|---|---|---|---|---|---|
| | 1* | 2* | 3 | 4 | 5 | 6 | 7 | 8 | 1 | 2 | 3 | 4 |
| Compatibility | | | | | | | | | | | | |
| Polyester-TGIC coating | 26 | 1 | 18 | 10 | 20 | 9 | 4 | 1 | 165 | 6 | 191 | 0 |
| Polyester-Primid coating | 19 | 5 | 13 | 6 | 31 | 18 | 8 | 3 | 189 | 3 | 155 | 2 |
| Coating film thickness (µm) | 69 | 70 | 71 | 69 | 68 | 72 | 71 | 69 | 72 | 69 | 71 | 70 |
| Gloss (60°) | 89 | 92 | 90 | 92 | 92 | 92 | 90 | 93 | 84 | 92 | 87 | 91 |
| Pencil hardness | H | H-2H | H | H | H-2H | H-2H | H | H | H | H | H-2H | F |
| Acid resistance | BB | BB | BB | BB | AA | AA | AA | BB | BB | CC | AA | CC |
| Solvent resistance | BB | BB | BB | BB | AA | AA | AA | BB | BB | CC-BB | AA | CC |

| | | | | | | | | | | | | |
|---|---|---|---|---|---|---|---|---|---|---|---|---|
| * Reference Only | | | | | | | | | | | | |

## Claims

1. An acrylic thermosetting powder coating composition comprising:
a glycidyl group-containing acrylic resin (A) which comprises at least one glycidyl copolymer (a) modified with a carboxyl compound (C) and which may contain an unmodified glycidyl copolymer (a), said modified and unmodified glycidyl copolymers (a) being obtained by copolymerizing glycidyl methyacrylate and/or β-methyl glycidyl methacrylate with other ethylenically unsaturated monomers; and
a polyvalent carboxyl compound (B) as a curing agent which is selected from aliphatic polybasic acids of 4 to 20 carbon atoms, dehydrated condensates thereof and polyester resins having carboxyl groups as a main functional group,
said carboxyl compound (C) being at least one compound selected from the group consisting of the fatty acids (c1) which are saturated or unsaturated fatty acids of 1 to 20 carbon atoms, the oxyacids (c2) which are aliphatic or aromatic oxyacids of 2 to 20 carbon atoms, and the polyvalent carboxyl compounds (c3) which are aliphatic polybasic acids of 4 to 20 carbon atoms, dehydrated condensates thereof, or polyester resins having carboxyl groups as a main functional group,
wherein the polyvalent carboxyl compound (c3) as the carboxyl compound (C) is different from the polyvalent carboxyl compound (B) as the curing agent component, and wherein the polyester resins as the compound (B) are used in combination with at least one of the aliphatic polybasic acids and the dehydrated condensates thereof, and
said glycidyl copolymer (a) for the glycidyl group-containing acrylic resin (A) having been modified in a modification amount of 0.1 to 10 mol% based on the total mol of the glycidyl groups and/or β-methyl glycidyl groups in (A) prior to the modification, and
wherein at least one of one or more modified glycidyl copolymers (a) for the glycidyl group-containing acrylic resin (A) has been modified in a manner such that:
(Z1) a lower-molecular-weight glycidyl copolymer (a-S) is modified with the carboxyl compound (C) and the resulting modified copolymer (a-S) is blended with a higher-molecluar-weight unmodified glycidyl copolymer (a-L) which is identical with the glycidyl copolymer (a-S) in the kind of the ethylenically unsaturated monomers copolymerized with glycidyl methacrylate and/or β-methyl glycidyl methacrylate and also in the weight ratio of these monomers and which differs from the glycidyl copolymer (a-S) in the molecular weight, in a molten or dissolved state so that only the low molecular weight fraction of glycidyl copolymer is selectively modified by the reaction of the glycidyl groups and/or β-methyl glycidyl groups with the carboxyl groups; or
(Z2) the glycidyl copolymer (a) is separated into two fractions of different molecular weights by reprecipitation with good and poor solvents, and the lower-molecular-weight fraction (a-S)' alone is modified with the carboxyl compound (C) and the modified lower-molecular-weight fraction (a-S)' is mixed with the unmodified higher-molecular-weight fraction (a-L)' and reblended with each other in a molten or dissolved state so that only the low molecular weight fraction of glycidyl copolymer is selectively modified by the reaction of the glycidyl groups and/or β-methyl glycidyl groups with the carboxyl groups.

2. The thermosetting powder coating composition of claim 1, wherein the glycidyl group-containing acrylic resin (A) contains a hydroxy group-containing ethylenically unsaturated monomer in a proportion of 1 to 15 wt% based on the total weight of glycidyl methacrylate and/or β-methyl glycidyl methacrylate and other ethylenically unsaturated monomer of all the glycidyl copolymers (a).

## Patentansprüche

1. Acrylische hitzehärtende Pulverbeschichtungszusammensetzung, welche enthält:
ein Glycidylgruppen enthaltendes Acrylharz (A), das mindestens ein mit einer Carboxyverbindung (C) modifiziertes Glycidylcopolymer (a) umfasst und das ein unmodifiziertes Glycidylcopolymer (a) enthalten kann, wobei die modifizierten und unmodifizierten Glycidylcopolymere (a) durch Copolymerisation von Glycidylmethacrylat und/oder β-Methylglycidylmethacrylat mit anderen ethylenisch ungesättigten Monomeren erhalten wird; und
eine mehrwertige Carboxyverbindung (B) als Härter, der unter aliphatischen mehrbasigen Säuren mit 4 bis 20 Kohlenstoffatomen, dehydratisierten Kondensaten davon und Polyesterharzen mit Carboxygruppen als hauptsächlicher funktioneller Gruppe ausgewählt ist,
wobei die Carboxyverbindung (C) mindestens eine Verbindung ist, die aus der Gruppe ausgewählt ist, die aus den Fettsäuren (c1), die gesättigte oder ungesättigte Fettsäuren mit 1 bis 20 Kohlenstoffatomen sind, den Oxysäuren (c2), die aliphatische oder aromatische Oxysäuren mit 2 bis 20 Kohlenstoffatomen sind, und den mehrwertigen Carboxyverbindungen (c3) besteht, die aliphatische mehrbasige Säuren mit 4 bis 20 Kohlenstoffatomen, dehydratisierte Kondensate davon oder Polyesterharze mit Carboxygruppen als hauptsächlicher funktioneller Gruppe sind,
wobei die mehrwertige Carboxyverbindung (c3) als die Carboxyverbindung (C) sich von der mehrwertigen Carboxyverbindung (B) als die Härterkomponente unterscheidet, und
wobei die Polyesterharze als die Verbindung (B) in Kombination mit mindestens einer der aliphatischen mehrbasigen Säuren und den dehydratisierten Kondensaten davon eingesetzt werden, und
das Glycidylcopolymer (a) für das Glycidylgruppen enthaltenden Acrylharz (A) in einer Modifikationsmenge von 0,1 bis 10 Mol-%, bezogen auf die Gesamtmolmenge der Glycidylgruppen und/oder der β-Methylglydicylgruppen in (A) vor der Modifikation, modifiziert worden ist, und
wobei mindestens eines von einem oder mehreren modifizierten Glycidylcopolymeren (a) für das Glycidylgruppen enthaltende Acrylharz (A) in einer Weise modifiziert worden ist, so dass folgendes gilt:
(Z1) ein niedermolekulares Glycidylcopolymer (a-S) wird mit der Carboxyverbindung (C) modifiziert, und das erhaltene modifizierte Copolymer (a-S) wird mit einem höhermolekularen unmodifizierten Glycidylcopolymer (a-L), welches mit dem Glycidylcopolymer (a-S) hinsichtlich der Art der ethylenisch ungesättigten Monomere, die mit Glycidylmethacrylat und/oder β-Methylglydicyl-Methacrylat copolymerisiert sind, und auch hinsichtlich des Gewichtsverhältnisses dieser Monomere identisch ist, und das sich von dem Glycidylcopolymer (a-S) im Molekulargewicht unterscheidet, in einem geschmolzenen oder aufgelösten Zustand gemischt, so dass nur die niedermolekulare Fraktion des Glycidylcopolymers durch die Reaktion der Glycidylgruppen und/oder der β-Methylglydicylgruppen mit dem Carboxygruppen selektiv modifiziert wird; oder
(Z2) das Glycidylcopolymer (a) wird durch Umfällung mit guten oder schwachen Lösungsmitteln in zwei Fraktionen unterschiedlichen Molekulargewichts aufgetrennt, und nur die niedermolekulare Fraktion (a-S)' wird mit der Carboxyverbindung (C) modifiziert, und die modifizierte niedermolekulare Fraktion (a-S)' wird mit der unmodifizierten höhermolekularen Fraktion (a-L)' gemischt und in einem geschmolzenen oder aufgelösten Zustand erneut miteinander vermengt, sodass nur die niedermolekulare Fraktion des Glycidylcopolymers durch die Reaktion der Glycidylgruppen und/oder der β-Methylglydicylgruppen mit den Carboxygruppen selektiv modifiziert wird.

2. Hitzehärtende Pulverbeschichtungszusammensetzung nach Anspruch 1, wobei das Glycidylgruppen enthaltende Acrylharz (A) ein Hydroxygruppen enthaltendes, ethylenisch ungesättigtes Monomer in einem Anteil von 1 bis 15 Gew.-%, bezogen auf das Gesamtgewicht des Glycidylmethacrylats und/oder des β-Methylglydicylmethacrylats und anderer ethylenisch ungesättigter Monomere aller Glycidylcopolymere (a), enthält.

## Revendications

1. Composition de revêtement de poudre thermodurcissable acrylique comprenant :
une résine acrylique comprenant un groupe glycidyle (A) qui comprend au moins un copolymère glycidylique (a) modifié avec un composé carboxyle (C) et lequel peut contenir un copolymère glycidylique (a) non modifié, lesdits copolymères glycidyliques (a) modifiés et non modifiés étant obtenus par copolymérisation de méthacrylate de glycidyle et/ou de méthacrylate de β-méthylglycidyle avec d'autres monomères éthyléniquement insaturés ; et
un composé carboxyle polyvalent (B) comme agent durcissant qui est choisi parmi des acides polybasiques aliphatiques ayant de 4 à 20 atomes de carbone, des condensats déshydratés de ceux-ci et des résines de polyester présentant des groupes carboxyles comme groupe fonctionnel principal,
ledit composé carboxyle (C) étant au moins un composé choisi dans le groupe constitué des acides gras (c1) qui sont saturés ou des acides gras insaturés ayant de 1 à 20 atomes de carbone, des oxyacides (c2) qui sont des oxyacides aliphatiques ou aromatiques ayant de 2 à 20 atomes de carbone, et des composés carboxyles polyvalents (c3) qui sont des acides polybasiques aliphatiques ayant de 4 à 20 atomes de carbone, des condensats déshydratés de ceux-ci ou des résines de polyester présentant des groupes carboxyles comme groupe fonctionnel principal,
dans laquelle le composé de carboxyle polyvalent (c3) en tant que composé de carboxyle (C) est différent du composé de carboxyle polyvalent (B) en tant que constituant d'agent durcissant, et dans laquelle les résines de polyester en tant que composé (B) sont utilisées en combinaison avec au moins un des acides polybasiques aliphatiques et des condensés déshydratés de ceux-ci, et
ledit copolymère glycidylique (a) pour la résine acrylique contenant un groupe glycidyle (A) ayant été modifié dans une quantité de modification de 0,1 à 10 % en mole rapporté aux moles totales des groupes glycidyle et/ou des groupes β-méthylglycidyle dans (A) avant la modification, et
dans laquelle au moins un des un ou plusieurs copolymères glycidyliques modifiés (a) pour la résine acrylique contenant un groupe glycidyle (A) a été modifié de telle manière que :
(Z1) un copolymère glycidylique de masse moléculaire inférieure (a-S) est modifié avec le composé carboxyle (C) et le copolymère modifié résultant (a-S) est combiné avec un copolymère glycidylique non modifié de masse moléculaire supérieure (a-L) qui est identique au copolymère glycidylique (a-S) dans le type des monomères éthyléniquement insaturés copolymérisés avec du méthacrylate de glycidyle et/ou du méthacrylate de β-méthylglycidyle et également dans le rapport massique de ces monomères et qui est différent du copolymère glycidylique (a-S) en masse moléculaire, dans un état fondu ou dissous de telle sorte que seule la fraction de masse moléculaire inférieure du copolymère glycidylique est modifiée de manière sélective par la réaction des groupes glycidyles et/ou des groupes β-méthylglycidyles avec les groupes carboxyles; ou
(Z2) le copolymère glycidylique (a) est séparé en deux fractions de masses moléculaires différentes par reprécipitation avec des solvants bons et médiocres, et la fraction (a-S)' de masse moléculaire inférieure seule est modifiée avec le composé carboxyle (C) et la fraction de masse moléculaire inférieure modifiée (a-S)' est mélangée avec la fraction de masse moléculaire supérieure non modifiée (a-L)' et elles sont recombinées l'une avec l'autre dans un état fondu ou dissous de telle sorte que seule la fraction de masse moléculaire inférieure du copolymère glycidylique est modifiée de manière sélective par la réaction des groupes glycidyles et/ou des groupes β-méthylglycidyles avec les groupes carboxyles.

2. Composition de revêtement de poudre thermodurcissable selon la revendication 1, dans laquelle la résine acrylique contenant un groupe glycidyle (A) contient un monomère éthyléniquement insaturé contenant un groupe hydroxy dans une proportion de 1 à 15 % en masse rapporté à la masse totale du méthacrylate de glycidyle et/ou du méthacrylate de β-méthylglycidyle et d'autres monomères éthyléniquement insaturés de tous les copolymères glycidyliques (a).
